# EUROPEAN PATENT APPLICATION

(11) **EP 4 778 689 A1**
(43) Date of publication of application: **22.07.2026**
(21) Application number: 24865346.1
(22) Date of filing: 05.09.2024
(51) Int. Cl.: B28B 3/00, B28B 1/087, B28B 7/34, F16C 33/32

(54) **METHOD FOR FILLING CERAMIC MOLDED BODY, METHOD FOR PRODUCING CIP BODY, AND METHOD FOR PRODUCING CERAMIC SINTERED BODY**

(30) Priority: 11.09.2023 JP 2023146652
(71) Applicant: Niterra Materials Co., Ltd., Yokohama-shi, Kanagawa 235-0032 (JP)
(72) Inventor: KAMO, Yuki, Yokohama-shi, Kanagawa 235-0032 (JP); ODA, Tatsuya, Yokohama-shi, Kanagawa 235-0032 (JP); AKIYA, Suguru, Yokohama-shi, Kanagawa 235-0032 (JP)
(74) Representative: Hoffmann Eitle
(86) International application number: PCT/JP2024/031800
(87) International publication number: WO 2025/057846

(57) **Abstract**

A method for inserting ceramic green compacts according to an embodiment: inserts ceramic green compacts into multiple hole portions formed in a CIP rubber mold, the ceramic green compacts being multiple pretreated green compacts before being subjected to a CIP process; and includes an arrangement step, a pouring step, and an operation execution step. The arrangement step arranges a fall prevention frame on an edge of the CIP rubber mold. The pouring step pours the multiple pretreated green compacts onto the CIP rubber mold having arranged thereon the fall prevention frame. The operation execution step executes an operation of fitting into an empty hole portion a pretreated green compact that has not fitted into any of the multiple hole portions formed in the CIP rubber mold having arranged thereon the fall prevention frame, among the multiple pretreated green compacts.

## Description

### TECHNICAL FIELD

An embodiment of the preset invention relates to a method for inserting ceramic green compacts, a method for producing CIP green compacts, and a method for producing sintered ceramic compacts.

### BACKGROUND ART

Various ceramic materials have properties, such as high hardness, an insulation property, and wear resistance. In particular, fine ceramics, which have enhanced purity and a uniform particle size, exhibit properties suitable for applications in various fields, such as capacitors, actuator materials, and refractory materials. Products formed by utilizing wear resistance and an insulation property among such properties are applicable to balls. Examples of ball applications include bearings, jigs, tools, gauges, solenoid valves, check valves, and various other valves. Among these, for bearing applications, materials, such as aluminum oxide, silicon nitride, and zirconium oxide, are used (see Patent Documents 1 to 3). For example, Patent Documents 1 and 2 each disclose a bearing ball formed with a silicon nitride material, and Patent Document 3 discloses a bearing ball formed with a zirconium oxide material.

In a process for producing such bearing ball materials, a method of sintering ceramic green compacts (sometimes referred to simply as "green compacts") is used. In addition, press molding that involves the use of a die is used as a molding method. Press molding is typically a method that includes filling a gap between an upper punch and a lower punch with powder, and applying pressure to the powder to obtain a pretreated green compact as a green compact before being subjected to a CIP process. Since such a pretreated green compact is formed by applying a uniaxial load to powder from above and below, a method for obtaining a homogeneous pretreated green compact is performed by further applying pressure from all directions using cold isostatic pressing (CIP) (Patent Document 4). According to Patent Document 4, during press molding, a gap needs to be provided between a tip portion of an upper punch and a tip portion of a lower punch to protect the die. This results in the formation of a spherical portion and a band-shaped portion in the pretreated green compact. Thus, a bearing ball material obtained by sintering such a pretreated green compact also has a spherical portion and a band-shaped portion formed therein.

In addition, as a method for forming pretreated green compacts, there is also disclosed a method for forming pre-sintered green compacts for ceramic ball materials by performing tumbling granulation without using a press die (Patent Document 5). According to Patent Document 5, it is allegedly possible to form pretreated green compacts without band-shaped portions through tumbling granulation.

### PRIOR ART DOCUMENTS

### PATENT DOCUMENT

Patent Document 1: Japanese Patent Laid-Open No. 6-48813
Patent Document 2: Japanese Patent No. 2764589
Patent Document 3: Japanese Patent Laid-Open No. 60-18620
Patent Document 4: International Publication No. WO 2023/003040
Patent Document 5: Japanese Patent Laid-Open No. 2001-146479

### SUMMARY OF THE INVENTION

### PROBLEMS TO BE SOLVED BY THE INVENTION

By filling multiple hole portions formed in a CIP rubber mold (sometimes referred to simply as a "rubber mold") with multiple pretreated green compacts, and applying isotropic hydraulic pressure to a rubber mold stacked product (i.e., a stack of multiple rubber molds), it is possible to uniformly collapse voids within the pretreated green compacts from each direction, thereby improving density uniformity of the pretreated green compacts. A step of filling the multiple hole portions formed in the rubber mold with the multiple pretreated green compacts can be performed using, for example, a method of directly fitting the pretreated green compacts into the hole portions from directly above the hole portions one by one, or a method of pouring the multiple pretreated green compacts from around a region above the center of the rubber mold to prevent them from falling off from an edge of the rubber mold, and then discharging the pretreated green compacts, which have not fitted into any of the multiple hole portions, from the surface of the rubber mold. The former method is problematic in that it requires a considerable time to fill all of the hole portions with the pretreated green compacts, and also requires a lot of effort.

The latter method is problematic in that immediately after being poured onto the rubber mold, each pretreated green compact spreads across the surface of the rubber mold while colliding strongly with the rubber mold or other pretreated green compacts, thereby rubbing against and wearing the surface of the rubber mold or damaging the rubber mold. When a CIP process is performed on the multiple pretreated green compacts filling the hole portions, it is desirable that the overall size of the rubber mold stacked product be the same as the size (i.e., outer shape and height) of a facility without the need for adjusting facility settings. Therefore, for small-diameter pretreated green compacts, it is desirable to form numerous hole portions in the rubber mold to perform a CIP process on a large number of pretreated green compacts, for improving productivity. However, it would be difficult to dispose pretreated green compacts in all of the hole portions in a short time. Thus, it follows that either a considerable time is required to fill all of the hole portions, or a CIP process is performed with empty hole portions unfilled with pretreated green compacts. In the latter case, each pretreated green compact may or may not have adjacent pretreated green compacts, which can potentially lead to nonuniform CIP conditions, thereby influencing the properties of sintered compacts to be obtained.

To perform a CIP process on a larger number of pretreated green compacts for improving productivity, it is desirable to set the size (i.e., diameter) of an opening portion of each hole portion to be close to the size (i.e., diameter) of each pretreated green compact. However, for a rubber mold in which the size of an opening portion of each hole portion is close to the size of each pretreated green compact, a considerable time would be required to fill all of the hole portions with the pretreated green compacts, which is problematic.

In addition, pretreated green compacts often have low strength. Thus, friction of the pretreated green compacts against the surface of the rubber mold or contact between multiple pretreated green compacts leads to the occurrence of defects, such as partial chipping or cracking of the pretreated green compacts. Defects in the pretreated green compacts are carried over to the resulting sintered compacts to be produced after a CIP process. For example, if a defective sintered compact is machined into a bearing ball, the resulting bearing ball has low reliability.

The present invention solves the foregoing problems, and provides a method for inserting ceramic green compacts, a method for producing CIP green compacts, and a method for producing sintered ceramic compacts each capable of increasing the efficiency of a CIP process, and also reducing defects that occur in the pretreated green compacts.

### MEANS FOR SOLVING THE PROBLEMS

A method for inserting ceramic green compacts according to an embodiment: inserts ceramic green compacts into multiple hole portions formed in a CIP rubber mold, the ceramic green compacts being multiple pretreated green compacts before being subjected to a CIP process; and includes an arrangement step, a pouring step, and an operation execution step. The arrangement step arranges a fall prevention frame on an edge of the CIP rubber mold. The pouring step pours the multiple pretreated green compacts onto the CIP rubber mold having arranged thereon the fall prevention frame. The operation execution step executes an operation of fitting into an empty hole portion a pretreated green compact that has not fitted into any of the multiple hole portions formed in the CIP rubber mold having arranged thereon the fall prevention frame, among the multiple pretreated green compacts.

### BRIEF DESCRIPTION OF THE DRAWINGS

[FIG. 1] FIG. 1 is an external view illustrating an example of a ceramic ball material produced using die press molding, for describing a method for inserting ceramic green compacts according to an embodiment.
[FIG. 2] FIG. 2 is a cross-sectional view illustrating an example of die press molding, for describing the method for inserting ceramic green compacts according to the embodiment.
[FIG. 3] FIG. 3 is an external view illustrating an example of a ceramic ball material produced using tumbling granulation forming, for describing the method for inserting ceramic green compacts according to the embodiment.
[FIG. 4] FIG. 4 is a perspective view illustrating an example of a rubber mold stacked product, for describing the method for inserting ceramic green compacts according to the embodiment.
[FIG. 5] FIG. 5 is a cross-sectional view illustrating an example of a rubber mold stacked product filled with pretreated green compacts, for describing the method for inserting ceramic green compacts according to the embodiment.
[FIG. 6] FIG. 6 is a perspective view illustrating a state in which a fall prevention frame is disposed on a rubber mold, for describing the method for inserting ceramic green compacts according to the embodiment.
[FIG. 7] FIG. 7 is a top view illustrating a state in which a fall prevention frame is disposed on a rubber mold, for describing the method for inserting ceramic green compacts according to the embodiment.
[FIG. 8] FIG. 8 is a cross-sectional view illustrating a state in which a fall prevention frame is disposed on a rubber mold, for describing the method for inserting ceramic green compacts according to the embodiment.
[FIG. 9] FIG. 9 is an enlarged cross-sectional view illustrating a state in which a fall prevention frame is disposed on a rubber mold, for describing the method for inserting ceramic green compacts according to the embodiment.
[FIG. 10] FIG. 10 is a cross-sectional view illustrating a state in which a fall prevention frame is disposed on a rubber mold, for describing a first step of the method for inserting ceramic green compacts according to the embodiment.
[FIG. 11] FIG. 11 is a cross-sectional view illustrating a state in which a fall prevention frame is disposed on a rubber mold, for describing a second step of the method for inserting ceramic green compacts according to the embodiment.
[FIG. 12] FIG. 12 is a cross-sectional view illustrating a state in which a fall prevention frame is disposed on a rubber mold, for describing a third step of the method for inserting ceramic green compacts according to the embodiment.
[FIG. 13] FIG. 13 is a cross-sectional view illustrating a state in which a fall prevention frame is disposed on a rubber mold, for describing a fourth step of the method for inserting ceramic green compacts according to the embodiment.
[FIG. 14] FIG. 14 is a cross-sectional view illustrating a state in which a fall prevention frame is disposed on a rubber mold, for describing a fifth step of the method for inserting ceramic green compacts according to the embodiment.
[FIG. 15] FIG. 15 is a cross-sectional view illustrating a state in which a fall prevention frame is disposed on a rubber mold, for describing a sixth step of the method for inserting ceramic green compacts according to the embodiment.
[FIG. 16] FIG. 16 is a cross-sectional view illustrating a state in which a fall prevention frame is disposed on a rubber mold, for describing a seventh step of the method for inserting ceramic green compacts according to the embodiment.
[FIG. 17] FIG. 17 is a cross-sectional view for illustrating rotation of a brush member in the method for inserting ceramic green compacts according to the embodiment.
[FIG. 18] FIG. 18 is a cross-sectional view for illustrating a function of a pallet member in the method for inserting ceramic green compacts according to the embodiment.
[FIG. 19] FIG. 19 is a perspective view for illustrating a method of attaching the pallet member in the method for inserting ceramic green compacts according to the embodiment.
[FIG. 20] FIG. 20 is a cross-sectional view for illustrating a method for inserting ceramic green compacts according to a comparative example.

### DESCRIPTION OF EMBODIMENTS

Hereinafter, an embodiment of a method for inserting ceramic green compacts, a method for producing CIP green compacts, and a method for producing ceramic balls will be described with reference to the drawings.

In the method for inserting green compacts according to the embodiment, each rubber mold of a rubber mold stacked product has multiple hole portions to be filled with multiple green compacts.

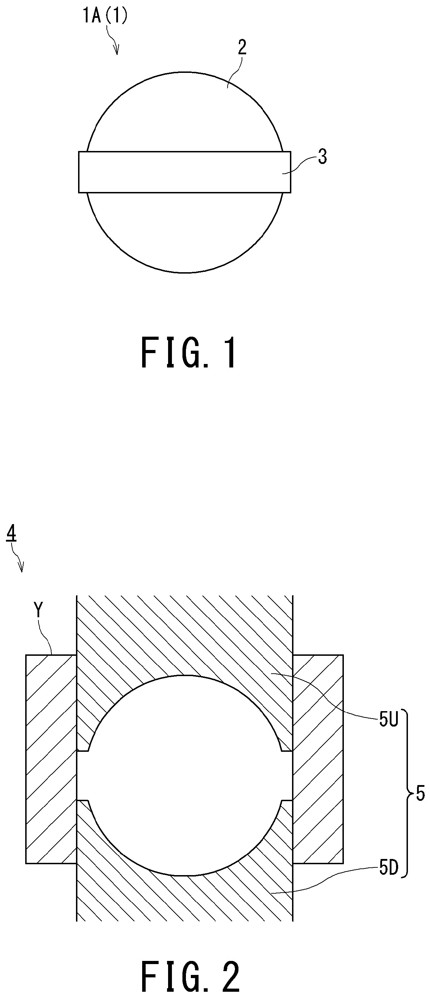

FIG. 1 illustrates a ceramic ball material, such as a bearing ball material, obtained by sintering a green compact formed through press molding. In FIG. 1, reference numeral 1 denotes a ceramic ball material, reference numeral 1A denotes a ceramic ball material with a band-shaped portion as an example of the ceramic ball material 1, reference numeral 2 denotes a spherical portion of the ceramic ball material 1, and reference numeral 3 denotes a band-shaped portion of the ceramic ball material 1. FIG. 2 illustrates a press die for forming a pretreated green compact, which is not sintered yet, for the ceramic ball material 1. In FIG. 2, reference numeral 4 denotes a press die, reference numeral 5 denotes a punch portion, reference numeral 5U denotes an upper punch of the punch portion 5, reference numeral 5D denotes a lower punch of the punch portion 5, and reference sign Y denotes a dice. A band-shaped portion of a green compact, formed in a space between a tip portion of the upper punch 5U, a tip portion of the lower punch 5D, and the dice Y, corresponds to the band-shaped portion 3 of the ceramic ball material 1A.

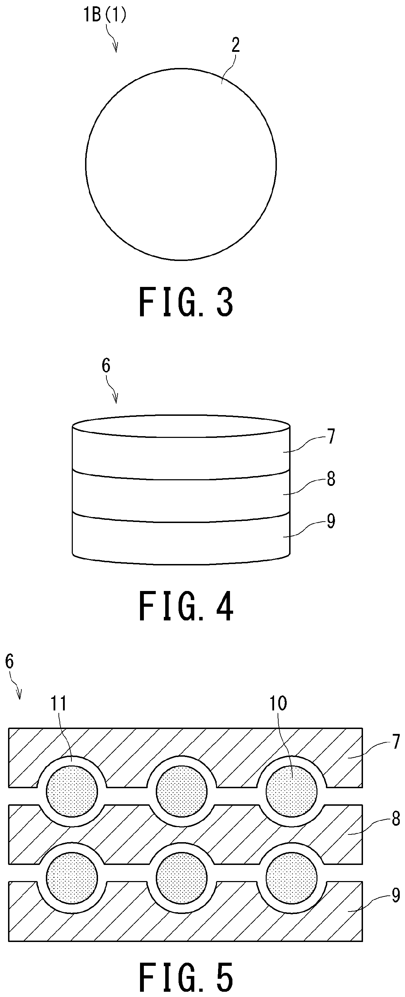

FIG. 3 illustrates a ceramic ball material obtained by sintering a green compact formed through tumbling granulation. In FIG. 3, reference numeral 1B denotes a ceramic ball material without a band-shaped portion as an example of the ceramic ball material 1. The ceramic ball material 1B without a band-shaped portion in FIG. 3 has no band-shaped portion 3, such as the one present in the ceramic ball material 1A with a band-shaped portion in FIG. 1, and only has a spherical portion 2.

FIG. 4 is a perspective view illustrating an example of a rubber mold stacked product formed by stacking three rubber molds. In FIG. 4, reference numeral 6 denotes the rubber mold stacked product, reference numeral 7 denotes an upper rubber mold, reference numeral 8 denotes a middle rubber mold, and reference numeral 9 denotes a lower rubber mold. The rubber mold stacked product 6 is not limited to the three-layer configuration illustrated in FIG. 4. For example, the rubber mold stacked product 6 may have two layers including the upper rubber mold 7 and the lower rubber mold 9 without the middle rubber mold 8, or may have four or more layers including two or more middle rubber molds 8.

FIG. 5 is a cross-sectional view illustrating an example of a rubber mold stacked product formed by stacking three rubber molds. In FIG. 5, reference numeral 6 denotes the rubber mold stacked product, reference numerals 7 to 9 denote the rubber molds, reference numeral 10 denotes pretreated green compacts, which are not sintered yet, for the ceramic ball materials 1 (illustrated in FIGS. 1 and 3), and reference numeral 11 denotes hole portions. Herein, the rubber mold stacked product 6 for processing the pretreated green compacts 10 is a forming mold used to perform CIP forming. Each of the rubber molds 7 to 9 of the rubber mold stacked product 6 has a plate shape. The "plate shape" herein refers to the shape of a rubber mold having a certain thickness (i.e., height). A bottom surface of the upper rubber mold 7, a top surface of the lower rubber mold 9, and opposite top and bottom surfaces of the middle rubber mold 8 are each provided with multiple hemispherical hole portions 11. The multiple hole portions 11 are arranged at positions where the opposite hemispherical hole portions 11 can form spherical shapes together.

Multiple pretreated green compacts 10 are poured onto the lower rubber mold 9 so that the multiple pretreated green compacts 10 are fitted into the multiple hole portions 11 formed in the top surface of the lower rubber mold 9. Then, the middle rubber mold 8 is stacked on the lower rubber mold 9. Next, multiple pretreated green compacts 10 are poured onto the stacked middle rubber mold 8 so that the multiple pretreated green compacts 10 are fitted into the multiple hole portions 11 formed in the top surface of the middle rubber mold 8. Then, the upper rubber mold 7 is stacked on the middle rubber mold 8. Alternatively, the middle rubber mold 8, which has multiple pretreated green compacts 10 fitted in advance into the multiple hole portions 11 formed in its top surface, is stacked on the lower rubber mold 9, and then, the upper rubber mold 7 is stacked on the middle rubber mold 8. Accordingly, the multiple pretreated green compacts 10 are sealed between the rubber molds 7 to 9. By applying isotropic hydraulic pressure to the stacked rubber molds 7 to 9, it is possible to uniformly collapse voids within the pretreated green compacts 10 from each direction, thereby improving density uniformity of the pretreated green compacts 10.

As illustrated in FIG. 5, each of the multiple hole portions 11 has a substantially hemispherical shape. In addition, a CIP green compact, which is a green compact obtained by performing a CIP process on the pretreated green compact 10, need not have a spherical shape, and may have a cylindrical (i.e., pellet) shape. When the CIP green compact has a cylindrical shape, the hole portion 11 does not have a substantially hemispherical shape, but has a substantially cylindrical shape with its opening portion having a substantially circular shape. Further, the CIP green compact may be based not only on the pretreated green compact 10 obtained using die molding but also on the pretreated green compact 10 obtained using tumbling granulation, for example. The CIP green compact based on the pretreated green compact 10 obtained using tumbling granulation, for example, may have a shape without a band-shaped portion. Therefore, the pretreated green compact 10 may or may not have a band-shaped portion. Although each of the rubber molds 7 to 9 should be designed considering the shapes of the hole portions 11, the shape of a side surface of each rubber mold is not limited to a particular shape. Note that each of the pretreated green compacts, the CIP green compacts, and degreased green compacts (described later) are examples of green compacts.

The rubber mold stacked product 6 is used to perform a CIP process on the pretreated green compacts 10. Examples of the CIP process include methods called WET-CIP and DRY-CIP. WET-CIP is a method that includes sealing powder or the pretreated green compacts 10 directly within a bag or a similar container having low deformation resistance and sufficient strength, and applying hydraulic pressure thereto while preventing contact between the powder or the pretreated green compacts 10 and a liquid. Meanwhile, DRY-CIP is a pressurization method performed with the rubber mold stacked product 6, using a base for supporting the rubber mold stacked product 6 at the bottom of the rubber mold stacked product 6. Since such methods apply hydraulic pressure, it is possible to perform forming with non-directional, isotropic pressure. With the isotropic pressure, it is possible to suppress nonuniform density distribution in the pretreated green compacts 10. CIP is also sometimes referred to as cold isostatic pressing or rubber pressing. The use of the rubber mold stacked product 6 yields more favorable results when DRY-CIP is adopted, in particular, of the two methods.

As illustrated in FIG. 4, each of the rubber molds 7 to 9 of the rubber mold stacked product 6 preferably has a plate shape, for example, the shape of a substantially perfectly circular plate. The shape of a substantially perfectly circular plate refers to a right circular cylindrical or elliptical cylindrical shape with a relatively low height between opposite top and bottom surfaces. Note that each of the plate-shaped rubber molds 7 to 9 is not limited to a circular plate shape, and may have a polygonal shape, for example. When each of the rubber molds 7 to 9 has a polygonal shape, it preferably has the shape of a polygon with five or more sides. In addition, each of the rubber molds 7 to 9 may be provided with engagement portions for connection to adjacent rubber molds above and below. When each of the rubber molds 7 to 9 has a circular plate shape, it is easier to perform positioning when stacking the multiple rubber molds 7 to 9 in a vertical direction. In particular, when each of the rubber molds 7 to 9 has the shape of a perfectly circular plate, it is possible to eliminate any directionality of the vertically adjacent rubber molds 7 to 9, which makes it easier to stack the rubber molds 7 to 9. This can also reduce the likelihood of collapse of the rubber mold stacked product 6, which includes the multiple stacked rubber molds 7 to 9, during transport. The number of stacked rubber molds of the rubber mold stacked product 6 is preferably two or more. Stacking multiple rubber molds can increase the number of pretreated green compacts 10 to be subjected to a CIP process at a time with the rubber mold stacked product 6.

The thickness (i.e., height) of a single layer, that is, each of the rubber molds 7 to 9 is preferably 5 mm to 30 mm. If the rubber molds 7 to 9 are too thin, the risk of their deformation will increase. If the rubber molds 7 to 9 deform, they may fail to engage properly with each other. In such a case, the rubber molds 7 to 9 may collapse during the stacking of the rubber molds 7 to 9 and during the transport of the rubber mold stacked product 6. In addition, even if the rubber molds 7 to 9 do not collapse, they may lose their balance, potentially causing problems during the transport of the rubber mold stacked product 6. Further, if the rubber molds 7 to 9 deform, it may become difficult to apply uniform pressure to the pretreated green compacts 10 during a CIP process.

The number of stacked rubber molds of the rubber mold stacked product 6 is not limited to a particular number (FIGS. 4 and 5 each illustrate an example in which three rubber molds are stacked), but the number is preferably 100 or less. If the number of stacked rubber molds is too large, the stacked rubber molds may collapse while the rubber mold stacked product 6 is transported into a CIP processing apparatus or while the rubber mold stacked product 6 is taken out of the CIP processing apparatus. In addition, even if the stacked rubber molds do not collapse, lateral sway of the rubber mold stacked product 6 that occurs during transport may accelerate degradation of the engagement portions. Therefore, the number of rubber molds of the rubber mold stacked product 6 is preferably 2 to 40. More preferably, the number of rubber molds is 2 to 25. Considering mass productivity and the like, the number of rubber molds is further preferably 3 to 20. This specification illustrates an example in which the number of rubber molds is three.

When the three rubber molds 7 to 9 are stacked, it is preferable that the heights of the rubber molds 7 to 9 have a minimal error. For example, it is preferable that the heights of the rubber molds 7 to 9 have an error of not greater than 10%. This is because a large error in the heights of the rubber molds 7 to 9 increases the likelihood of collapse of the rubber molds 7 to 9 during the transport of the rubber mold stacked product 6. It is also preferable that the stacked surface areas of the rubber molds 7 to 9 have a minimal error. This is because a large error in the stacked surface areas of the rubber molds 7 to 9 may make it difficult to apply uniform pressure during a CIP process.

If necessary, the side surfaces of the rubber molds 7 to 9, the top surface of the rubber mold 7, and the bottom surface of the rubber mold 9 (i.e., non-hole surfaces without the hole portions 11) may be provided with recess portions or protruding portions for purposes such as marking or weight reduction. That is, the shape of each of the non-hole surfaces of the rubber molds 7 to 9 is not limited to a particular shape.

In addition, it is preferable that the Shore hardness Hs of each of the rubber molds 7 to 9 be in the range of 30 to 50. As described above, isotropic pressure is applied to the rubber molds 7 to 9 filled with the pretreated green compacts 10. If the Shore hardness Hs is in the range of 30 to 50, the deformation amount can be made uniform. Therefore, such a Shore hardness can ensure deformation ability that allows for uniform contact between the surfaces of the pretreated green compacts 10 and the rubber molds 7 to 9. In addition, the durability of the rubber molds 7 to 9 also becomes excellent. Note that the Shore hardness Hs is measured in compliance with JIS-Z-2246 (2000).

Each pretreated green compact 10 has a shape such as a spherical, cylindrical, or plate shape. Among these, the pretreated green compact 10 preferably has a spherical shape to produce the spherical ceramic ball material 1 illustrated in FIGS. 1 and 3. The spherical shape may be a shape including the spherical portion 2 and the band-shaped portion 3, such as the ceramic ball material 1A with a band-shaped portion (illustrated in FIG. 1), or a shape including only the spherical portion 2, such as the ceramic ball material 1B without a band-shaped portion (illustrated in FIG. 3). As described above, performing a CIP process can apply isotropic pressure to the pretreated green compacts 10. In particular, when each pretreated green compact 10 has a spherical shape, the effect of applying isotropic pressure can be obtained more easily.

Each pretreated green compact 10 preferably contains, as its main component (i.e., 50 mass% or more), one or more of aluminum oxide, silicon nitride, boron nitride, zirconium oxide, silicon carbide, and aluminum nitride. Further, each pretreated green compact 10 more preferably contains 85 mass% or more of one or more of aluminum oxide, silicon nitride, boron nitride, zirconium oxide, silicon carbide, and aluminum nitride. The pretreated green compact 10 undergoes CIP, followed by a degreasing step if necessary, and then becomes a sintered ceramic compact (hereinafter also referred to simply as a "sintered compact") through a sintering step. If the pretreated green compact 10 has a ball shape, the resulting sintered ceramic compact also has a ball shape. The ball-shaped sintered ceramic compact is also referred to as the ceramic ball material 1, and is used as a bearing ball. A bearing ball is produced by polishing the ceramic ball material 1. In particular, a sintered compact of silicon nitride has excellent wear resistance, and thus can be effectively used as a bearing ball.

The phrase "each pretreated green compact 10 contains 85 mass% or more of one or more of aluminum oxide, silicon nitride, boron nitride, zirconium oxide, silicon carbide, and aluminum nitride" means that the resulting sintered ceramic compact also contains 85 mass% or more of one or more of aluminum oxide, silicon nitride, boron nitride, zirconium oxide, silicon carbide, and aluminum nitride. In addition to such a main component(s), 15 mass% or less of sintering agent may also be contained.

For example, the Vickers hardness of a sintered compact of aluminum oxide or a sintered compact of zirconium oxide is in the range of about 1200 to 1700. Meanwhile, the toughness value of such a sintered compact is in the range of about 3 MPₐ·m^{1/2} to 6 MPa·m^{1/2}, and thus is low. In contrast, the Vickers hardness of a sintered compact of silicon nitride is in the range of about 1400 and 1800, and thus is high. In addition, the toughness value of such a sintered compact is in the range of about 5 MPa·m^{1/2} to 10 MPa·m^{1/2}, and thus is also high. Since the sintered compact of silicon nitride achieves both a high toughness value and high Vickers hardness, it exhibits excellent wear resistance. This is because the sintered compact of silicon nitride has a microstructure primarily composed of β-silicon nitride crystal grains. The β-silicon nitride crystal grains have an elongated shape. Such elongated crystal grains are intertwined with each other in a complex manner so that a high toughness value is achieved.

Polishing is required to form a spherical sintered ceramic compact into a bearing ball. A spherical sintered ceramic compact obtained through a sintering step is referred to as the ceramic ball material 1 (illustrated in FIGS. 1 and 3). In the case of FIG. 1, the obtained ceramic ball material 1 is a sphere with the band-shaped portion 3 originating from the band-shaped portion of the green compact 10. In the case of FIG. 3, the obtained ceramic ball material 1 is a sphere without the band-shaped portion 3 originating from the band-shaped portion of the pretreated green compact 10. A sphere obtained by polishing the ceramic ball material 1 is referred to as a bearing ball.

As described above, the rubber mold stacked product 6 is suitable for applying isotropic pressure to the pretreated green compacts 10. In particular, the rubber mold stacked product 6 is suitable for performing a CIP process on the pretreated green compacts 10. Bearing balls come in various diameters in the range of 1 mm to 50 mm. The rubber mold stacked product 6 can be applied to the pretreated green compacts 10 of various sizes.

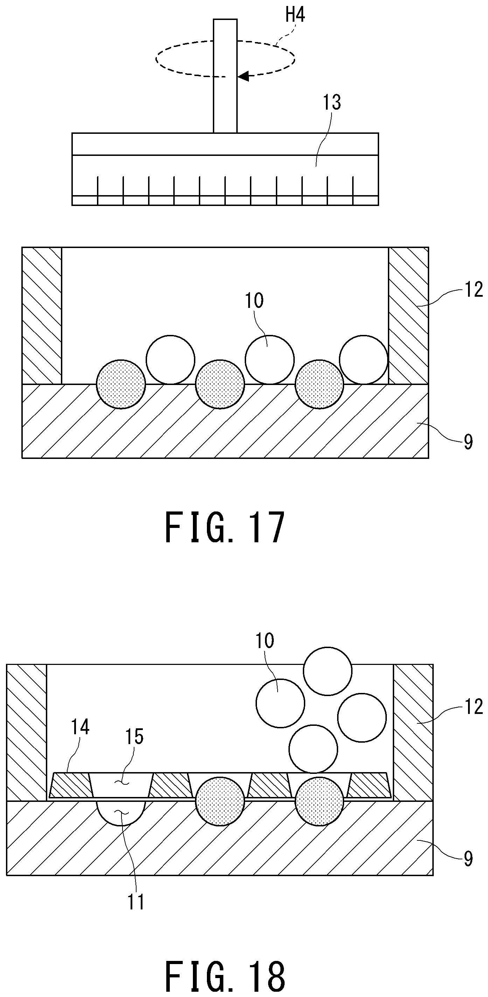

A method for inserting the pretreated green compacts 10 includes an arrangement step of arranging a fall prevention frame 12 on each of edges of the rubber molds 8 and 9, a pouring step of pouring the green compacts 10 onto each of the rubber molds 8 and 9 having the fall prevention frame 12 arranged thereon, and an operation execution step of executing an operation of fitting (i.e., a fitting operation on) the pretreated green compacts 10, which have not fitted into any of the multiple hole portions 11 formed in each of the rubber molds 8 and 9 having the fall prevention frame 12 arranged thereon, into empty hole portions 11 among the multiple pretreated green compacts 10. Note that the method for inserting the pretreated green compacts 10 may further include a step of removing the pretreated green compacts 10, which have not fitted into any of the multiple hole portions 11 formed in each of the rubber molds 8 and 9 having the fall prevention frame 12 arranged thereon, after the operation execution step. In addition, as described later with reference to FIG. 18, the arrangement step of the method for inserting the pretreated green compacts 10 may further include a step of arranging a pallet member 14 having multiple hole portions 15 on each of the rubber molds 8 and 9.

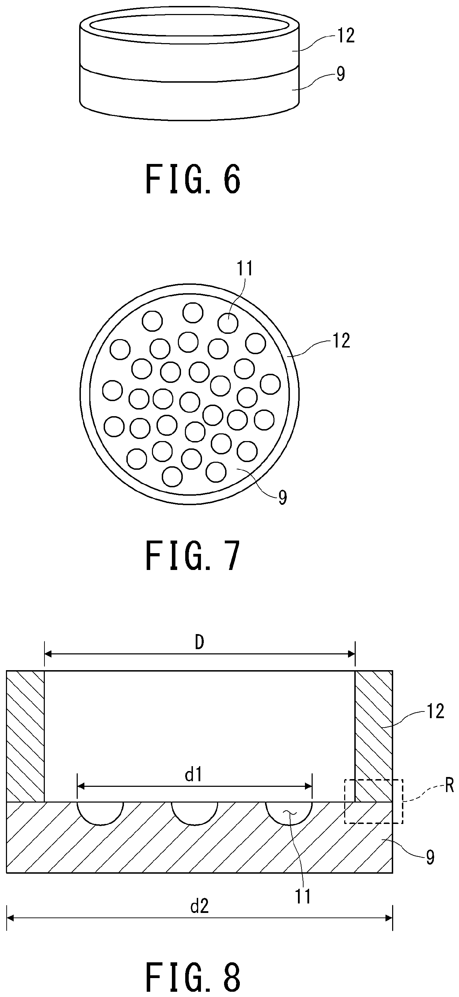

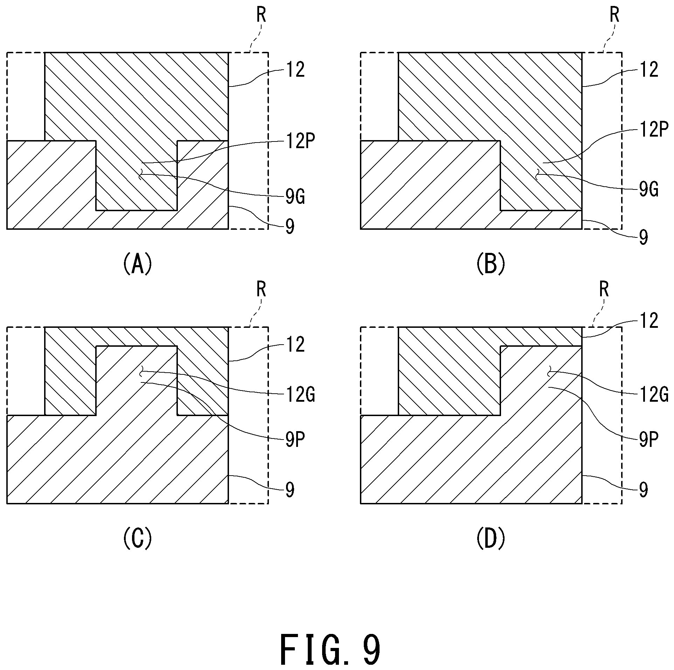

FIG. 6 is a perspective view illustrating an example of arrangement of the fall prevention frame 12 on the lower rubber mold 9. FIG. 7 is a top view illustrating an example of arrangement of the fall prevention frame 12 on the lower rubber mold 9. FIG. 8 is a cross-sectional view illustrating an example of arrangement of the fall prevention frame 12 on the lower rubber mold 9, cut along a plane including the central axis of the cylinder. FIG. 9 is an enlarged cross-sectional view of a region R illustrated in FIG. 8.

FIGS. 6 to 9 each illustrate an example of the rubber molds 8 and 9 having the hole portions 11 formed in their top surface (e.g., the lower rubber mold 9), among the rubber molds 7 to 9 of the rubber mold stacked product 6. Of the two rubber molds 8 and 9 having the hole portions 11 formed in their top surface, the middle rubber mold 8 also has hole portions 11 formed in its bottom surface. The fall prevention frame 12, which is disposed on the upper side of the lower rubber mold 9, has a shape conforming to the edge of the lower rubber mold 9, for example, a cylindrical shape.

As illustrated in FIG. 8, the maximum length (i.e., inside diameter) D between inner walls of the fall prevention frame 12 is desirably larger than the diameter d1 of a region including portions of the lower rubber mold 9 where the multiple hole portions 11 are arranged (D > d1). This is because if the inside diameter D of the fall prevention frame 12 is smaller than the diameter d1, it is necessary to move the fall prevention frame 12 to fit the pretreated green compacts 10 into the hole portions 11, which is a complex step. The inside diameter D may be larger than the maximum length (i.e., outside diameter) d2 of the lower rubber mold 9 (D > d2). In such a case, however, the increased inside diameter D results in a larger area, thereby requiring a longer time to fit the pretreated green compacts 10 into the hole portions 11. In addition, if the inside diameter D is larger than the outside diameter d2, there is a risk that the pretreated green compacts 10 may fall through a gap between the inner wall of the fall prevention frame 12 and the outer wall of the lower rubber mold 9 if the gap is larger than the size of each pretreated green compact 10. Even if the gap between the inner wall of the fall prevention frame 12 and the outer wall of the lower rubber mold 9 is smaller than the size of each pretreated green compact 10, there is a risk that the pretreated green compacts 10 may become lodged in the gap, thereby requiring a longer time to fit the pretreated green compacts 10 into the hole portions 11. Therefore, the inside diameter D is preferably smaller than the sum of the outside diameter d2 and the diameter of each pretreated green compact 10.

To prevent the fall prevention frame 12 from unintentionally falling off the lower rubber mold 9 during the execution of the fitting operation, the fall prevention frame 12 may be engaged with the lower rubber mold 9 when arranged thereon. For example, as illustrated in divisions (A) and (B) of FIG. 9, a protruding portion 12P of the fall prevention frame 12 is inserted into and engaged with a recess portion 9G of the lower rubber mold 9 so that the fall prevention frame 12 is arranged on the lower rubber mold 9. The difference between divisions (A) and (B) of FIG. 9 is whether a combination of the recess portion 9G and the protruding portion 12P is provided at the center or on the outer side of the fall prevention frame 12. In divisions (A) and (B) of FIG. 9, the fall prevention frame 12 engages with the lower rubber mold 9 such that it abuts surfaces of the rubber mold 9 other than the recess portion 9G. However, the protruding portion 12P may be inserted such that the fall prevention frame 12 abuts only the recess portion 9G.

Alternatively, as illustrated in divisions (C) and (D) of FIG. 9, for example, a protruding portion 9P of the lower rubber mold 9 is inserted into and engaged with a recess portion 12G of the fall prevention frame 12 so that the fall prevention frame 12 is arranged on the lower rubber mold 9. The difference between divisions (C) and (D) of FIG. 9 is whether a combination of the protruding portion 9P and the recess portion 12G is provided at the center or on the outer side of the fall prevention frame 12. Note that there may be one or more combinations of the recess portion 9G and the protruding portion 12P, or there may be one or more combinations of the protruding portion 9P and the recess portion 12G. Further, in addition to or instead of providing the combination of the recess portion 9G and the protruding portion 12P or the combination of the protruding portion 9P and the recess portion 12G, it is also possible to temporarily fix the lower rubber mold 9 and the fall prevention frame 12 together using a jig that can be connected to both the lower rubber mold 9 and the fall prevention frame 12.

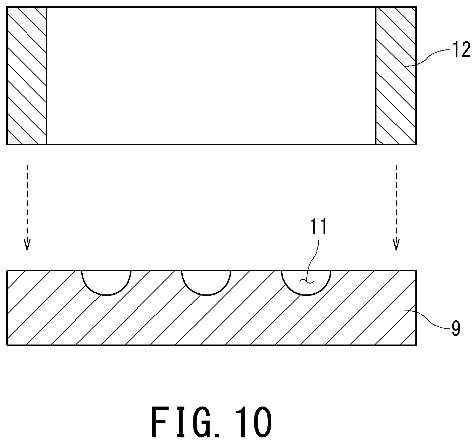

FIGS. 10 to 15 are diagrams for describing a method for inserting the pretreated green compacts 10 into the rubber molds 8 and 9 having the hole portions 11 formed in their top surface (e.g., the lower rubber mold 9). Note that FIGS. 10 to 15 each illustrate an example of a method for inserting the pretreated green compacts 10 into the lower rubber mold 9 of the two rubber molds 8 and 9. FIG. 10 illustrates a first step performed before pouring the pretreated green compacts 10 onto the lower rubber mold 9. The fall prevention frame 12 moves toward the lower rubber mold 9 (indicated by dashed arrows in FIG. 10) to be attached to the lower rubber mold 9.

The material of the fall prevention frame 12 may be any material that hardly deforms or wears, and is easy to process. For example, metals, such as stainless steel, or plastic, such as vinyl chloride or fluororesin, is used for the fall prevention frame 12. The fall prevention frame 12 may also be formed with a combination of materials, such as a metal underlayer having a surface coated with plastic. Rubber used for the lower rubber mold 9 may also be used for the fall prevention frame 12. The shape of the fall prevention frame 12 may be determined in keeping with the shape of the lower rubber mold 9, and thus may be not only a cylindrical shape but also a rectangular tube shape. In such a case, the fall prevention frame 12 may be a single cylinder or rectangular tube, but the fall prevention frame 12 may also be formed by combining elements each having a shape obtained by dividing a cylinder or a rectangular tube.

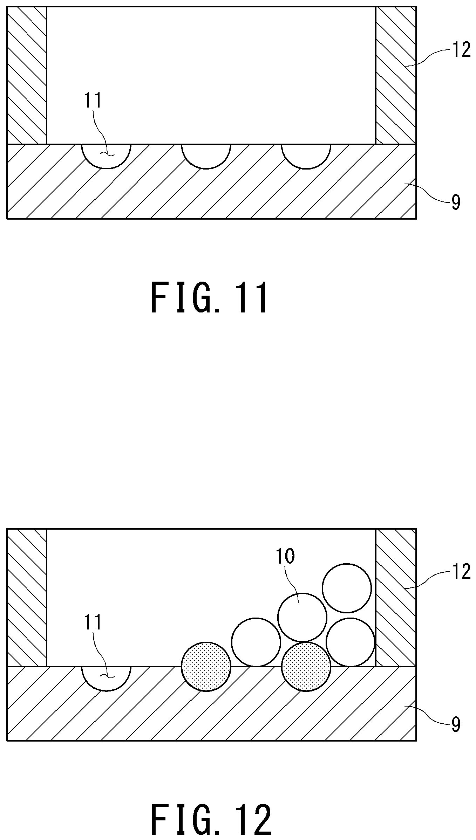

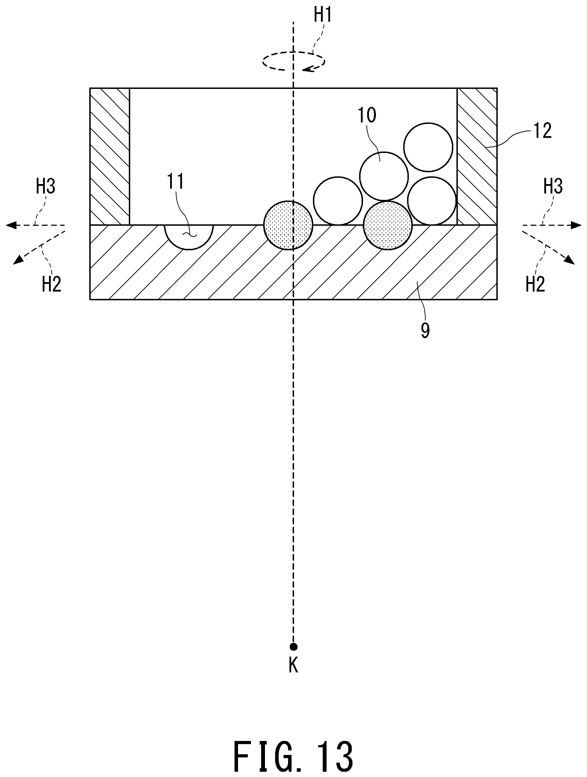

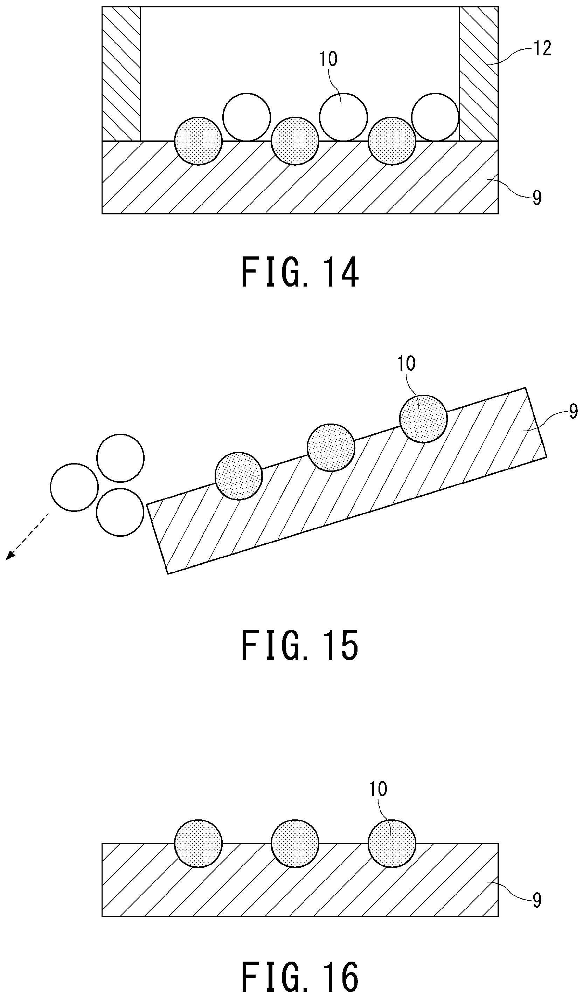

FIG. 11 illustrates a second step of disposing the fall prevention frame 12 on the lower rubber mold 9. FIGS. 12 illustrates a third step of pouring the multiple pretreated green compacts 10 onto the lower rubber mold 9, which has the fall prevention frame 12 disposed thereon, from a region around an inner side of the fall prevention frame 12. To pour as many pretreated green compacts 10 as possible into the multiple hole portions 11 in a short time, a larger number of pretreated green compacts 10 than the number of the hole portions 11 are poured. It is preferable to pour the multiple pretreated green compacts 10 from a position where at least one of the poured pretreated green compacts 10 contacts the inner side of the fall prevention frame 12. Avoiding the pouring of the pretreated green compacts 10 from a position around a region above the center of the lower rubber mold 9 can suppress the spread of each pretreated green compact 10 across the surface of the lower rubber mold 9 while it strongly collides with the lower rubber mold 9 or other pretreated green compacts 10 immediately after being poured onto the lower rubber mold 9. FIG. 12 (and FIGS. 13 and 14 as well) illustrates an example in which the number of the pretreated green compacts 10 is larger than the number of the hole portions 11.

FIG. 13 illustrates a fourth step of executing a fitting operation for fitting the pretreated green compacts 10, which have not fitted into any of the hole portions 11 solely by rolling after being poured, into the empty hole portions 11. For example, as illustrated in FIG. 13, the fitting operation includes rotating the lower rubber mold 9 about a vertical axis (indicated by a dashed arrow H1 in FIG. 13) (i.e., the following step (1)), oscillating the lower rubber mold 9 in an arc direction (indicated by dashed arrows H2 in FIG. 13) about a virtual rotation axis K (i.e., the following step (2)), and/or vibrating the lower rubber mold 9 in a horizontal direction (indicated by dashed arrows H3 in FIG. 13) (i.e., the following step (3)). The fourth step of executing the fitting operation includes one or more steps selected from among the following steps (1) to (4).
(1) Rotating the lower rubber mold 9 about the vertical axis.
(2) Oscillating the lower rubber mold 9 in an arc direction.
(3) Vibrating the lower rubber mold 9 in the horizontal direction.
(4) Rotating a brush member that has been caused to contact the multiple pretreated green compacts.

FIG. 14 illustrates a fifth step in which, through the fitting operation, the pretreated green compacts 10 have been fitted into all of the empty hole portions 11. In FIG. 14, while the pretreated green compacts 10 have been fitted into all of the hole portions 11 of the lower rubber mold 9, surplus pretreated green compacts 10 are present.

In step (1) above, that is, the step of rotating the lower rubber mold 9, the lower rubber mold 9 is rotated at a speed of 1 rpm to 50 rpm, for example. The rotation may be performed in one direction, or the direction of rotation may be changed during the rotation. If the rotational speed of the lower rubber mold 9 is too high, for example, greater than 50 rpm, the efficiency of fitting the pretreated green compacts 10 into the empty hole portions 11 will increase. However, the possibility of collision between the multiple pretreated green compacts 10 will increase, resulting in an increased risk of chipping defects. As the pretreated green compacts 10 are larger, the rotational speed is preferably set lower. Meanwhile, if the rotational speed of the lower rubber mold 9 is too low, for example, less than 1 rpm, the pretreated green compacts 10 will hardly move.

In step (2) above, that is, the step of oscillating the lower rubber mold 9, it is possible to use a method of oscillating the lower rubber mold 9 in a horizontal direction or a vertical direction other than a method of oscillating the lower rubber mold 9 in an arc direction. When the horizontal oscillation method is used, oscillation is achieved by reciprocating the lower rubber mold 9 over a distance of 10% to 100% of its diameter at a frequency (i.e., oscillation frequency) of 1 to 10 times per second, for example. When the vertical oscillation method is used, oscillation is achieved by moving the lower rubber mold 9 up and down at an angle of 5° to 15° with respect to its center at a frequency of 1 to 10 times per second, for example. When the arc-like oscillation method is used, oscillation is also achieved by moving the lower rubber mold 9 in an arc direction at an angle of 5° to 15° with respect to its center (i.e., virtual rotation axis K) when the rubber mold 9 is disposed horizontally, at a frequency of 1 to 10 times per second. At this time, if the oscillation frequency is too high, for example, greater than 10 times per second, the efficiency of fitting the pretreated green compacts 10 into the empty hole portions 11 will increase. However, the possibility of collision between the multiple pretreated green compacts 10 will increase, resulting in an increased risk of chipping defects. As the pretreated green compacts 10 are larger, the oscillation condition is preferably set smaller. Meanwhile, if the oscillation frequency for the lower rubber mold 9 is too low, for example, 1 time per second, the pretreated green compacts 10 will hardly move.

In step (3) above, that is, the step of vibrating the lower rubber mold 9 in the horizontal direction, horizontal vibration is provided to the lower rubber mold 9 at a frequency of 10 Hz to 100 Hz, for example. If the horizontal vibration frequency is too high, for example, greater than 100 Hz, the efficiency of fitting the pretreated green compacts 10 into the empty hole portions 11 will increase. However, the possibility of collision between the multiple pretreated green compacts 10 will increase, resulting in an increased risk of chipping defects. As the pretreated green compacts 10 are larger, the horizontal vibration frequency is preferably set lower. Meanwhile, if the vibration frequency for the lower rubber mold 9 is too low, for example, less than 10 Hz, the pretreated green compacts 10 will hardly move.

FIG. 15 illustrates a sixth step of removing the pretreated green compacts 10 that have not fitted into the lower rubber mold 9. At this time, the fall prevention frame 12 is detached from the lower rubber mold 9. In FIG. 15, the lower rubber mold 9, with the fall prevention frame 12 detached therefrom, is tilted to cause the pretreated green compacts 10, which have not fitted into any of the hole portions 11, to fall from the lower rubber mold 9 for removal in the direction of a dashed arrow. Besides, it is also possible to use other various methods, such as using a brush member or an air blower, for example, to remove the pretreated green compacts 10 that have not fitted into any of the hole portions 11. FIG. 16 illustrates a state after the pretreated green compacts 10 that have not fitted into the lower rubber mold 9 are removed and the tilt of the lower rubber mold 9 is eliminated (i.e., seventh step). In such a state, it is desirable from the perspective of increasing the efficiency of a CIP process that the number of the pretreated green compacts 10 filling the hole portions 11 be equal to the total number of the hole portions 11, but it is also possible that the number of the pretreated green compacts 10 filling the hole portions 11 is smaller than the total number of the hole portions 11.

FIG. 17 illustrates step (4) above, that is, the step of rotating a brush member 13, which has been caused to contact the multiple pretreated green compacts 10, to rotate in an arc direction (indicated by a dashed arrow H4 in FIG. 17) about its axis. In FIG. 17, the brush member 13 applies a force in the horizontal direction to fit the pretreated green compacts 10 into the empty hole portions 11. By pressing the brush member 13 against the pretreated green compacts 10, which have not fitted into any of the hole portions 11, from above while rotating the brush member 13 in the state of FIG. 12, it is possible to assist in fitting the pretreated green compacts 10, which have not fitted into any of the hole portions 11, into the empty hole portions 11. In step (4) above, the brush member 13 is rotated at a speed of 1 rpm to 50 rpm, for example. If the rotational speed is too high, for example, greater than 50 rpm, the efficiency of fitting the pretreated green compacts 10 into the empty hole portions 11 will increase. However, the possibility of collision between the multiple pretreated green compacts 10 will increase, resulting in an increased risk of chipping defects. As the pretreated green compacts 10 are larger, the rotational speed is preferably set lower. Meanwhile, if the rotational speed of the brush member 13 is too low, for example, less than 1 rpm, the pretreated green compacts 10 will hardly move.

In the method for inserting the pretreated green compacts 10, the pallet member 14 may also be arranged on the lower rubber mold 9. The pallet member 14 has multiple hole portions 15 at positions corresponding to the respective hole portions 11 formed in the top surface of the lower rubber mold 9. FIG. 18 is a cross-sectional view illustrating the pallet member 14 with the multiple hole portions 15 arranged on the lower rubber mold 9. The pallet member 14 is provided with the multiple hole portions 15 at the same positions as those of the multiple hole portions 11 formed in the top surface of the lower rubber mold 9. As illustrated in FIG. 18, it is desirable that the diameter of each of top-surface openings of the multiple hole portions 15 be larger than the diameter of each of bottom-surface openings of the multiple hole portions 15. When the diameter of each of the top-surface openings of the multiple hole portions 15 is larger than the diameter of each of the bottom-surface openings of the multiple hole portions 15, it is possible to allow the pretreated green compacts 10 to easily fit into the hole portions 11. It is also desirable that the diameter of each of lower openings of the pallet member 14 be equal to or larger than the diameter of each of the openings of the hole portions 11.

In the method for inserting the pretreated green compacts 10, the maximum diameter of each of the pretreated green compacts 10 is 15 mm or less. If the maximum diameter is large, the number of the hole portions 11 in the lower rubber mold 9 is reduced. Thus, the pretreated green compacts 10 can be arranged in all of the hole portions 11 in a short time. In contrast, if the maximum diameter of each of the pretreated green compacts 10 is 15 mm or less, more hole portions 11 are formed in the lower rubber mold 9 to increase production capacity. However, according to the present embodiments, the pretreated green compacts 10 can be fitted into the hole portions 11 of the lower rubber mold 9 in a short time.

Next, a method for producing the ceramic ball materials 1 will be described. The method for producing the ceramic ball materials 1 according to the embodiment is a method that involves the use of the foregoing method for inserting the pretreated green compacts 10.

In addition, a method for producing CIP green compacts includes, in addition to a step of forming the rubber mold stacked product 6 by filling the multiple hole portions 11 formed in each of the rubber molds 8 and 9 with the multiple pretreated green compacts 10 and then stacking the rubber mold 8 on the rubber mold 9, a step of performing a CIP process on the multiple pretreated green compacts 10 filling the hole portions 11.

Further, a method for producing sintered ceramic compacts includes, in addition to the step of forming the rubber mold stacked product 6 by filling the multiple hole portions 11 formed in each of the rubber molds 8 and 9 with the multiple pretreated green compacts 10 and then stacking the rubber mold 8 on the rubber mold 9, and the step of performing a CIP process on the multiple pretreated green compacts 10 filling the hole portions 11, a step of sintering the CIP green compacts to obtain sintered ceramic compacts. Note that the sintered ceramic compacts each having a ball shape correspond to the ceramic ball materials 1.

The method for producing sintered ceramic compacts, for example, the ceramic ball materials 1 need only have the foregoing configuration. However, a method for improving yield will be described hereinafter.

First, a method for preparing the pretreated green compacts 10 will be described using silicon nitride. When each pretreated green compact 10 contains, as its main component (i.e., 50 mass% or more), one or more of aluminum oxide, boron nitride, and zirconium oxide, the description should be read by replacing the main component with silicon nitride. In examples of the present invention, uniaxial pressing is used as an example of a method for obtaining the pretreated green compacts 10. However, the molding method is not limited thereto. For example, a tumbling granulation method may be used as the molding method.

First, appropriate amounts of sintering agent powder, additives, a solvent, and a binder, for example, are added to and mixed with silicon nitride powder as a raw material. Then, the mixture is subjected to disintegration and then to granulation using a spray dryer. Through such a step, granulated powder of the raw material powder is prepared. When the total amount of the silicon nitride powder and the sintering agent powder is taken as 100 mass%, the amount of the silicon nitride powder is preferably set to 85 mass% or more. The additives are, for example, a plasticizer. The solvent is water or an organic solvent. Examples of the organic solvent include alcohol, ketone, and benzene. The binder is an organic material. When the total amount of the silicon nitride powder and the sintering agent powder is taken as 100 parts by mass, the amount of the binder to be added is preferably set to 3 to 20 parts by mass. Adjusting the amount of the binder can control shape retention ability and density uniformity of the green compacts 10 during the uniaxial pressing and the CIP. In addition, preparing the granulated powder can uniformly mix the silicon nitride powder and sintering agent powder. The average particle size of the granulated powder is preferably 50 µm to 150 µm.

Next, uniaxial pressing is performed on the granulated powder. Examples of the uniaxial pressing include a die molding method that involves the use of the upper punch 5U and the lower punch 5D illustrated in FIG. 2. The shape of each pretreated green compact 10 to be obtained can be controlled based on the shape of the die. When each of inner sides of the upper punch 5U and the lower punch 5D has a hemispherical shape, a spherical green compact 10 can be obtained. Alternatively, when each of the inner sides of the upper punch 5U and the lower punch 5D has a substantially cylindrical shape, a pellet-like (i.e., substantially cylindrical) pretreated green compact 10 can be obtained. The pretreated green compact 10 obtained through the uniaxial pressing has a spherical shape including the spherical portion 2 and the band-shaped portion 3 illustrated in FIG. 1.

Next, a step of performing a CIP process on the pretreated green compacts 10 is performed. To perform the CIP process, the rubber mold stacked product 6 is used. The multiple hole portions 11 formed in each of the rubber molds 8 and 9 of the rubber mold stacked product 6, for example, the lower rubber mold 9 are filled with the multiple pretreated green compacts 10. At this time, providing the lower rubber mold 9 with a large number of hole portions 11 can increase the number of pretreated green compacts 10 to be processed. In addition, when the lower rubber mold 9 is provided with the multiple hole portions 11, it is preferable to perform a CIP process after all of the hole portions 11 are filled with the pretreated green compacts 10. This is because, although it is possible to fill only some of the hole portions 11 with the pretreated green compacts 10, more uniform isotropic pressure can be applied when all of the hole portions 11 are filled with the pretreated green compacts 10.

The pretreated green compacts 10 are formed using granulated powder. Thus, applying isotropic pressure to the pretreated green compacts 10 through a CIP process can press the granulated powder, thereby suppressing density variation. That is, using granulated powder for forming the pretreated green compacts 10 can suppress density variation by uniformly dispersing the silicon nitride powder and the sintering agent powder. If the pressure applied to the pretreated green compacts 10 during the CIP process is not uniform, the granulated powder will remain unpressed. Such unpressed portions become a cause of density variation.

The pressure applied during the CIP forming is preferably higher than the pressure applied during the uniaxial pressing. Further, the conditions of the CIP process are preferably set such that pressure in the range of 30 MPa to 300 MPa is applied. Applying pressure in such a range can reduce density variation among the CIP green compacts after the CIP process. This is particularly effective when the rubber molds 7 to 9 of the rubber mold stacked product 6, which have a Shore hardness Hs of 30 to 50, are used. If the pressure applied during the CIP process is less than 30 MPa, the pressure may be insufficient. Meanwhile, if the pressure is high, for example, greater than 300 MPa, the durability of the rubber molds 7 to 9 may decrease.

The CIP green compacts can have reduced density variation. Therefore, the shrinkage ratio of the CIP green compacts during a sintering step described below can be controlled. Improving the CIP green compacts leads to improvements of the sintered ceramic compacts to be obtained. The method for producing the ceramic ball materials 1 using the rubber mold stacked product 6 can reduce the defect occurrence rate of the CIP green compacts.

Next, a degreasing step of degreasing the CIP green compacts is performed. The degreasing step is a step of heating the CIP green compacts to the decomposition temperature of organic components, such as the binder, or higher to remove the organic components. The degreasing step may be performed in a nitrogen atmosphere or an air atmosphere. Through the degreasing step, degreased green compacts can be obtained as the green compacts.

Next, a sintering step of sintering the degreased green compacts is performed. The sintering step is preferably performed at 1700°C to 2000°C. In addition, the sintering step is preferably performed in a nitrogen atmosphere. Pressure applied during the sintering is preferably set in the range of the atmospheric pressure to 300 MPa. Note that the atmospheric pressure is 0.10133 MPa (= 1 atm). The sintered compacts obtained through the sintering step may be subjected to a HIP (hot isostatic pressing) process. Through such a step, sintered ceramic compacts (e.g., the ceramic ball materials 1) can be obtained. The ceramic ball materials 1 correspond to sintered ceramic compacts with a theoretical density of 98% or higher.

Polishing the ceramic ball materials 1 can produce ceramic balls. A representative example of a method for polishing spheres is surface plate machining. For example, the ceramic ball materials 1 are inserted into a gap between surface plates arranged in parallel. The ceramic ball materials 1 can be polished into true spheres through a movement of the surface plates for polishing. The surface roughness of bearing balls is defined by ASTM F2094. For bearing balls, a grade conforming to ASTM F2094, ISO 26602, or JIS R 1669 is adopted depending on their application. Polishing is performed to achieve a surface roughness Ra corresponding to the grade. When higher grades are adopted, mirror finishing may be performed to achieve a surface roughness Ra of 0.01 µm or less.

### (Examples 1 to 30 and Comparative Examples 1 to 8)

Sintering agent powder, additives, a solvent, and a binder, for example, were added to and mixed with ceramic powder as a raw material. Then, the mixture was subjected to disintegration and then to granulation using a spray dryer. As illustrated in Tables 1 to 6, Examples 1 to 26 and Comparative Examples 1 to 4 correspond to the pretreated green compacts 10 of silicon nitride (i.e., silicon nitride green compacts) containing 85 mass% or more of silicon nitride, Examples 27 and 28 and Comparative Examples 5 and 6 correspond to the pretreated green compacts 10 of aluminum oxide (i.e., alumina; aluminum oxide green compacts) containing 85 mass% or more of aluminum oxide, and Examples 29 and 30 and Comparative Examples 7 and 8 correspond to the pretreated green compacts 10 of zirconium oxide (i.e., zirconia; zirconium oxide green compacts) containing 85 mass% or more of zirconium oxide. For each case, when the total amount of the main component and the sintering agent was taken as 100 parts by mass, the amount of the binder added was set to 3 to 20 parts by mass. In Table 5, aluminum oxide is indicated as alumina, and zirconium oxide is indicated as zirconia.

Next, press molding was performed on the granulated powder. The press molding was performed through die molding using the upper punch 5U and the lower punch 5D of a press molding apparatus 4 illustrated in FIG. 2. Press molding performed with the upper punch 5U and the lower punch 5D is uniaxial pressing. The die is adapted to produce a spherical green compact. Accordingly, the pretreated green compact 10 was fabricated. The pretreated green compact 10 used in each example corresponds to the ceramic ball material 1A having a band-shaped portion, that is, having the spherical portion 2 and the band-shaped portion 3, as illustrated in FIG. 1. However, the pretreated green compact 10 is similarly produced even if it corresponds to the ceramic ball material 1B having no band-shaped portion and having only the spherical portion 2, as illustrated in FIG. 3.

The rubber molds 7 to 9 were prepared to perform a CIP process on each pretreated green compact 10. As the rubber molds 7 to 9, those having a Shore hardness Hs of 30 to 50 were used. In addition, the fall prevention frame 12 was fabricated using vinyl chloride. The outer perimeter of the fall prevention frame 12 was set equal to the outer perimeter of each of the rubber molds 7 to 9. Further, the pallet member 14 was fabricated using vinyl chloride. The positions of the hole portions 15 of the pallet member 14 were set the same as the positions of the respective hole portions 11 formed in the top surface of each of the rubber molds 7 and 8. Each hole portion 15 was formed such that its bottom-surface opening portion has an equal diameter to the diameter of each of the openings of the multiple hole portions 11 formed in the top surface of each of the rubber molds 7 and 8, and each hole portion 15 is tapered at an angle of 45 degrees with its diameter increasing from the bottom-surface opening portion toward the top-surface opening portion.

In each example, as illustrated in FIG. 8, the fall prevention frame 12 was disposed on each of the rubber molds 8 and 9 having no hole portion 11 in their bottom surface, among the rubber molds 7 to 9. FIG. 8 illustrates a case where the fall prevention frame 12 is disposed on the lower rubber mold 9 of the two rubber molds 8 and 9, for example. Next, while a fitting operation was applied to each of the rubber molds 8 and 9 having the fall prevention frame 12 disposed thereon, a number of pretreated green compacts 10 were poured onto each rubber mold from a region around an inner surface of the fall prevention frame 12, where the number of the pretreated green compacts 10 is equal to 0.8 times the number of the hole portions 11 formed in the top surface of each of the rubber molds 8 and 9 having the fall prevention frame 12 disposed thereon.

The conditions for the fitting operation include the following four conditions. The following Condition (1A) corresponds to the condition of step (1) above. The following Condition (2A) corresponds to the condition of step (2) above. The following Condition (3A) corresponds to the condition of step (3) above. The following Condition (4A) corresponds to the condition of step (4) above.
(1A) Rotate each of the rubber molds 8 and 9 about a vertical axis at a speed of 6 rpm to 60 rpm (Examples 1 to 4).
(2A) Oscillate each of the rubber molds 8 and 9 in an arc direction about a vertical axis, on opposite sides of the axis, at an angle of 2° to 20° at a frequency of 0.5 to 5 times per second (Examples 5 to 12).
(3A) Vibrate each of the rubber molds 8 and 9 in a horizontal direction about a vertical axis, on opposite sides of the axis, at a frequency of 30 Hz to 150 Hz (Examples 13 to 16).
(4A) Rotate a cylindrical brush member made of nylon, which has been caused to contact the multiple pretreated green compacts from above, in the same direction as the direction of rotation of each of the rubber molds 8 and 9 at a speed of 10 rpm to 50 rpm (Examples 17 to 19).

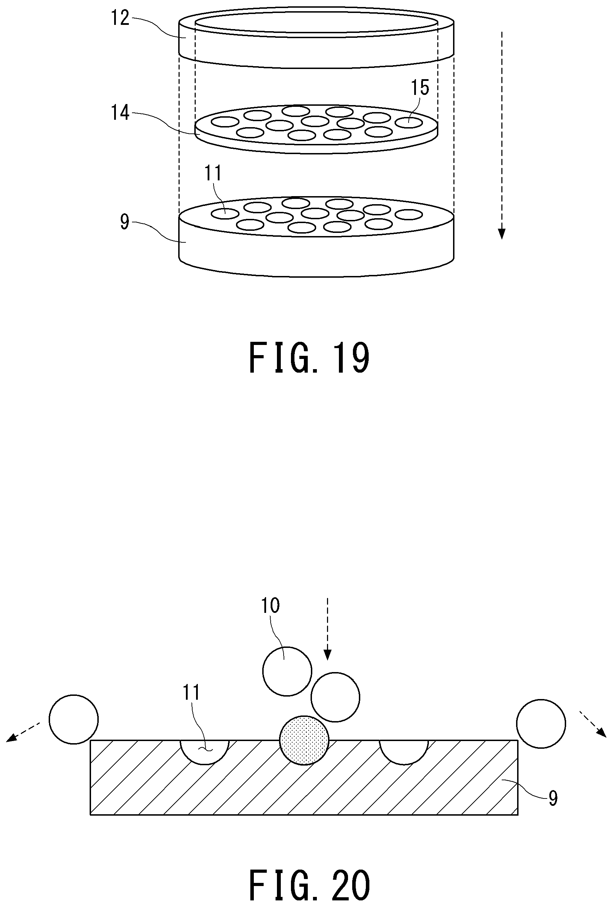

Table 1 illustrates Condition (1) above. Table 2 illustrates Condition (2) above. Table 3 illustrates Condition (3) above. Table 4 illustrates Condition (4) above. The time from the start of pouring the pretreated green compacts 10 to the end of the fitting operation was set to 60 seconds for each case. In contrast, in Comparative Examples 1 and 2, the fitting operation was not executed on the middle rubber mold 8 or the lower rubber mold 9, and as indicated by a dashed arrow on the upper side of FIG. 20, the pretreated green compacts 10 were poured from a region above the central portion of each of the middle rubber mold 8 and the lower rubber mold 9. Then, each of the pretreated green compacts 10, which have not fitted into any of the multiple hole portions 11, and the pretreated green compacts 10, which have fallen from an edge portion of each of the rubber molds 8 and 9 in the directions of dashed arrows on opposite sides, was collected to be dropped again. FIG. 20 illustrates a case where the pretreated green compacts 10 fall from the lower rubber mold 9 of the two rubber molds 8 and 9. The time from the initial pouring of the pretreated green compacts 10 until they come to rest on each of the rubber molds 8 and 9 after the third pouring was set to 60 seconds, and the pretreated green compacts 10 were dropped three times at intervals of 20 seconds. Note that the diameter of each of the green compacts of Examples 1 to 19 and Comparative Examples 1 and 2 was set to 15 mm.

For each example, after the fitting operation, the filling rate [%], which indicates the percentage of the number of the pretreated green compacts 10 fitted into the hole portions 11 relative to the total number of the poured pretreated green compacts 10, was measured. Tables 1 to 4 each illustrate the filling rate. A state in which all of the poured pretreated green compacts 10 have been fitted into the hole portions 11 corresponds to a filling rate of 100%. Referring to Tables 1 to 4, since there are examples in which the filling rate is 95% or higher, Conditions (1) and (2) are suitable. Next, since there are examples in which the filling rate is 94% or higher, Condition (4) is suitable. Next, the middle rubber mold 8 filled with the pretreated green compacts 10 was stacked on the lower rubber mold 9 filled with the pretreated green compacts 10. Then, the upper rubber mold 7 was stacked on the middle rubber mold 8 to form the rubber mold stacked product 6. Such a rubber mold stacked product 6 was used to perform a CIP process on the multiple pretreated green compacts 10 filling the hole portions 11. As pressure applied during the CIP process, hydrostatic pressure in the range of 30 MPa to 300 MPa, higher than pressure applied during the uniaxial pressing, was applied. Through such a step, CIP green compacts were fabricated.

Next, appearance inspection was performed on the CIP green compacts as the green compacts subjected to the CIP process, using an optical microscope. The number of CIP green compacts having chipping defects was counted to determine the chipping defect rate. Tables 1 to 4 each illustrate the chipping defect rate.

**[Table 1]**

| Inserting Method | Condition (1A): Rotation of Rubber Mold | | | |
|---|---|---|---|---|
| | Material | Rotational Speed [rpm] | Filling Rate [%] | Chipping Defect Rate [%] |
| Example 1 | Silicon Nitride | 6 | 90.1 | 0.0 |
| Example 2 | Silicon Nitride | 15 | 91.0 | 0.0 |
| Example 3 | Silicon Nitride | 30 | 95.6 | 1.0 |
| Example 4 | Silicon Nitride | 60 | 93.8 | 2.0 |
| Comparative Example 1 | Silicon Nitride | 0 | 80.9 | 4.5 |
| Comparative Example 2 | Silicon Nitride | 0 | 81.8 | 5.6 |

**[Table 2]**

| Inserting Method | Condition (2A): Oscillation of Rubber Mold | | | | |
|---|---|---|---|---|---|
| | Material | Angle [°] | Oscillation Frequency [times/sec] | Filling Rate [%] | Chipping Defect Rate [%] |
| Example 5 | Silicon Nitride | 2 | 5 | 83.6 | 0.0 |
| Example 6 | Silicon Nitride | 5 | 5 | 88.2 | 0.0 |
| Example 7 | Silicon Nitride | 10 | 5 | 92.8 | 1.0 |
| Example 8 | Silicon Nitride | 20 | 5 | 89.2 | 2.1 |
| Example 9 | Silicon Nitride | 10 | 5 | 91.0 | 0.0 |
| Example 10 | Silicon Nitride | 10 | 3 | 93.8 | 0.0 |
| Example 11 | Silicon Nitride | 10 | 1 | 96.5 | 1.0 |
| Example 12 | Silicon Nitride | 10 | 0.5 | 94.7 | 1.9 |
| Comparative Example 1 | Silicon Nitride | 0 | 0 | 80.9 | 4.5 |
| Comparative Example 2 | Silicon Nitride | 0 | 0 | 81.8 | 5.6 |

**[Table 3]**

| Inserting Method | Condition (3A): Horizontal Vibrate of Rubber Mold | | | |
|---|---|---|---|---|
| | Material | Frequency [Hz] | Filling Rate [%] | Chipping Defect Rate [%] |
| Example 13 | Silicon Nitride | 30 | 88.2 | 0.0 |
| Example 14 | Silicon Nitride | 50 | 88.2 | 0.0 |
| Example 15 | Silicon Nitride | 80 | 91.9 | 0.0 |
| Example 16 | Silicon Nitride | 150 | 92.8 | 1.0 |
| Comparative Example 1 | Silicon Nitride | 0 | 80.9 | 4.5 |
| Comparative Example 2 | Silicon Nitride | 0 | 81.8 | 5.6 |

**[Table 4]**

| Inserting Method | Condition (4A): Rotation of Brush | | | |
|---|---|---|---|---|
| | Material | Rotational Speed [rpm] | Filling Rate [%] | Chipping Defect Rate [%] |
| Example 17 | Silicon Nitride | 10 | 91.9 | 0.0 |
| Example 18 | Silicon Nitride | 30 | 92.8 | 1.0 |
| Example 19 | Silicon Nitride | 50 | 94.7 | 1.9 |
| Comparative Example 1 | Silicon Nitride | 0 | 80.9 | 4.5 |
| Comparative Example 2 | Silicon Nitride | 0 | 81.8 | 5.6 |

The insertion method according to each of Examples 20 to 30 combines multiple fitting operations. In the insertion method according to each of Examples 20 to 30, the fall prevention frame 12 is disposed on each of the rubber molds 8 and 9 as illustrated in FIG. 8. Next, while the following fitting operations were applied to each of the rubber molds 8 and 9, a number of pretreated green compacts 10 were poured from a region around the inner surface of the fall prevention frame 12, where the number of the pretreated green compacts 10 is equal to 0.8 times the number of the hole portions 11 formed in the top surface of each of the lower rubber mold 9 and the middle rubber mold 8. The conditions for the fitting operations include the following four conditions that are performed concurrently. The following Condition (1B) corresponds to the condition of step (1) above. The following Condition (2B) corresponds to the condition of step (2) above. The following Condition (3B) corresponds to the condition of step (3) above. The following Condition (4B) corresponds to the condition of step (4) above.
(1B) Rotate each of the rubber molds 8 and 9 about a vertical axis at a speed of 6 rpm to 30 rpm.
(2B) Oscillate each of the rubber molds 8 and 9 in an arc direction about a vertical axis, on opposite sides of the axis, at an angle of up to 10° at a frequency of 3 to 5 times per second.
(3B) Vibrate each of the rubber molds 8 and 9 in a horizontal direction about a vertical axis, on opposite sides of the axis, at a frequency of 30 Hz to 50 Hz.
(4B) Rotate a cylindrical brush member made of nylon, which has been caused to contact the multiple pretreated green compacts from above, in the same direction as the direction of rotation of each of the rubber molds 8 and 9 at a speed of 10 rpm.

The insertion method according to each of Examples 22 and 25 to 27 includes performing fitting operations in a similar manner with the pallet member 14 attached to each of the rubber molds 8 and 9 together with the fall prevention frame 12 in the direction of a dashed arrow in FIG. 19. The time from the start of pouring the pretreated green compacts 10 to the end of the fitting operation was set to 60 seconds. In contrast, regarding the insertion method according to each of Comparative Examples 3 to 8, the fitting operation was not applied, and as illustrated in FIG. 20, the multiple pretreated green compacts 10 were poured from a region above the central portion of the lower rubber mold 9. Then, the pretreated green compacts 10, which have not fitted into any of the multiple hole portions 11, were collected from portions around the lower rubber mold 9 so as to be dropped again. The time from the initial pouring of the pretreated green compacts 10 until they come to rest on each of the rubber molds 8 and 9 after the third pouring was set to 60 seconds, and the pretreated green compacts 10 were dropped three times at intervals of 20 seconds. Table 5 illustrates the conditions for the fitting operations.

**[Table 5]**

| | Material | Green Compact Diameter [mm] | Rotational Speed [rpm] | Oscillation Frequency [times/sec] |
|---|---|---|---|---|
| Example 20 | Silicon Nitride | 15 | 15 | 3 |
| Example 21 | Silicon Nitride | 15 | 30 | 3 |
| Example 22 | Silicon Nitride | 15 | 6 | 3 |
| Example 23 | Silicon Nitride | 3 | 15 | 3 |
| Example 24 | Silicon Nitride | 3 | 15 | 5 |
| Example 25 | Silicon Nitride | 3 | 15 | 5 |
| Example 26 | Silicon Nitride | 3 | 15 | 5 |
| Example 27 | Alumina | 15 | 15 | 3 |
| Example 28 | Alumina | 3 | 6 | 3 |
| Example 29 | Zirconia | 15 | 15 | 5 |
| Example 30 | Zirconia | 3 | 15 | 3 |
| Comparative Example 3 | Silicon Nitride | 15 | 0 | 0 |
| Comparative Example 4 | Silicon Nitride | 3 | 0 | 0 |
| Comparative Example 5 | Alumina | 15 | 0 | 0 |
| Comparative Example 6 | Alumina | 3 | 0 | 0 |
| Comparative Example 7 | Zirconia | 15 | 0 | 0 |
| Comparative Example 8 | Zirconia | 3 | 0 | 0 |

| | Frequency [Hz] | Brush Member | Pallet Member |
|---|---|---|---|
| Example 20 | 40 | With | Without |
| Example 21 | 40 | With | Without |
| Example 22 | 40 | With | With |
| Example 23 | 40 | With | Without |
| Example 24 | 40 | With | Without |
| Example 25 | 50 | With | With |
| Example 26 | 30 | With | With |
| Example 27 | 40 | With | With |
| Example 28 | 40 | With | Without |
| Example 29 | 40 | With | Without |
| Example 30 | 30 | With | Without |
| Comparative Example 3 | 0 | Without | Without |
| Comparative Example 4 | 0 | Without | Without |
| Comparative Example 5 | 0 | Without | Without |
| Comparative Example 6 | 0 | Without | Without |
| Comparative Example 7 | 0 | Without | Without |
| Comparative Example 8 | 0 | Without | Without |

For each example, after the fitting operation, the filling rate was measured by counting the number of the pretreated green compacts 10 filling each of the rubber molds 8 and 9. Table 6 illustrates the filling rate. A state in which all of the poured pretreated green compacts 10 have been fitted into the hole portions 11 corresponds to a filling rate of 100%. Next, the middle rubber mold 8 filled with the multiple pretreated green compacts 10 was stacked on the lower rubber mold 9 filled with the multiple pretreated green compacts 10. Then, the upper rubber mold 7 was stacked on the middle rubber mold 8 to form the rubber mold stacked product 6. Such a rubber mold stacked product 6 was used to perform a CIP process on the multiple pretreated green compacts 10. As pressure applied during the CIP process, hydrostatic pressure in the range of 30 MPa to 300 MPa, higher than pressure applied during the uniaxial pressing, was applied. Through such a step, CIP green compacts were fabricated.

Next, appearance inspection was performed on the green compacts subjected to the CIP process, using an optical microscope. The number of green compacts having chipping defects was counted to determine the chipping defect rate. Table 6 illustrates the chipping defect rate.

**[Table 6]**

| | Filling Rate [%] | Chipping Defect Rate [%] |
|---|---|---|
| Example 1 | 100.0 | 0.0 |
| Example 2 | 100.0 | 0.0 |
| Example 3 | 98.2 | 0.0 |
| Example 4 | 100.0 | 0.7 |
| Example 5 | 99.3 | 0.7 |
| Example 6 | 98.6 | 0.0 |
| Example 7 | 99.3 | 0.7 |
| Example 8 | 100.0 | 0.0 |
| Example 9 | 98.6 | 0.0 |
| Example 10 | 100.0 | 2.4 |
| Example 11 | 99.3 | 2.2 |
| Comparative Example 1 | 82.1 | 4.3 |
| Comparative Example 2 | 87.9 | 2.4 |
| Comparative Example 3 | 78.6 | 4.5 |
| Comparative Example 4 | 87.1 | 3.3 |
| Comparative Example 5 | 89.3 | 4.2 |
| Comparative Example 6 | 86.4 | 3.3 |

Next, degreasing and sintering steps were performed on the green compacts other than those with chipping defects. For silicon nitride, the sintering step was performed at 1800°C in a nitrogen atmosphere under atmospheric pressure. For aluminum oxide and zirconium oxide, the sintering step was performed at 1500°C in an air atmosphere under atmospheric pressure. After that, for silicon nitride, a HIP process was performed at a temperature of 1700°C to 1900°C in a nitrogen atmosphere at a pressure of 50 MPa to 200 MPa. For aluminum oxide and zirconium oxide, a HIP process was performed at a temperature of 1300°C to 1500°C in an air atmosphere at a pressure of 50 MPa to 200 MPa.

Appearance inspection was performed on the unpolished sintered compacts, using the ceramic ball materials 1 produced from the pretreated green compacts 10 of each of Examples 1 to 30 and Comparative Examples 1 to 8.

Examples 23 to 26, 28, and 30 as well as Comparative Examples 4, 6, and 8 correspond to the ceramic ball materials 1 for ceramic balls to have a diameter of 1.34 mm after being polished. Examples 1 to 22, 27, and 29 as well as Comparative Examples 1 to 3, 5, and 6 correspond to the ceramic ball materials 1 for ceramic balls with a size of 15/32 inches (11.91 mm). All of such ceramic balls can be used as bearing balls.

As is clear from Tables 1 to 4 above, the filling rate of the pretreated green compacts 10 in the insertion method according to each example was found to be high. In contrast, the filling rate of the pretreated green compacts 10 in the insertion method according to each comparative example was found to be lower than that of each example. This is because the pretreated green compacts 10 have been promptly fitted into the hole portions 11 of each of the rubber molds 8 and 9 due to the effect of the fitting operation. In addition, the chipping defect rate of the insertion method according to each example was found to be low, while that of the insertion method according to each comparative example was found to be high. This is because the insertion method according to each example requires only one operation of pouring the pretreated green compacts 10 to achieve a given filling rate, thereby reducing the likelihood of collision between the multiple pretreated green compacts 10. In contrast, the insertion method according to each comparative example does not require the fitting operation, but instead involves an increased number of operations of pouring (i.e., dropping) the pretreated green compacts 10 to achieve a given filling rate, thereby increasing the likelihood of collision between the multiple pretreated green compacts 10, and thus increasing chipping defects.

In addition, as is clear from Tables 1 to 6 above, the filling rate of the pretreated green compacts 10 when the insertion method according to each of Examples 20 to 30, which combines multiple fitting operations, was adopted was found to be higher than that when the insertion method according to each of Examples 1 to 19, which involves an independent fitting operation, was adopted. This is because the pretreated green compacts 10 have been promptly fitted into the hole portions 11 of each of the rubber molds 8 and 9 due to the combination of multiple different fitting operations. Although all of the four fitting operations were combined and performed in each of Examples 20 to 30, it is needles to mention that greater effects are obtained when more types of fitting operations are combined, even if the number of the combined fitting operations is two or more and three or less.

According to the embodiment described above, it is possible to provide a method for inserting the pretreated green compacts 10, a method for producing CIP green compacts, and a method for producing sintered compacts each capable of increasing the efficiency of a CIP process by fitting a large number of pretreated green compacts 10 into the hole portions 11 of each of the rubber molds 8 and 9 in a short time, and also reducing defects that occur in the pretreated green compacts 10. In addition, according to the embodiment, it is possible to maintain a high yield of the ceramic ball materials 1 by fitting a large number of pretreated green compacts 10 into the hole portions 11 of each of the rubber molds 8 and 9 in a short time.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A method for inserting ceramic green compacts into multiple hole portions formed in a CIP rubber mold, the ceramic green compacts being multiple pretreated green compacts before being subjected to a CIP process, the method comprising:
an arrangement step of arranging a fall prevention frame on an edge of the CIP rubber mold;
a pouring step of pouring the multiple pretreated green compacts onto the CIP rubber mold having arranged thereon the fall prevention frame; and
an operation execution step of executing an operation of fitting into an empty hole portion a pretreated green compact that has not fitted into any of the multiple hole portions formed in the CIP rubber mold having arranged thereon the fall prevention frame, among the multiple pretreated green compacts.

2. The method for inserting ceramic green compacts according to claim 1, wherein the operation execution step includes one or more of a step of rotating the CIP rubber mold, a step of oscillating the CIP rubber mold, a step of vibrating the CIP rubber mold in a horizontal direction, and a step of rotating a brush member that has been caused to contact the multiple pretreated green compacts.

3. The method for inserting ceramic green compacts according to claim 1 or 2, further comprising, after the operation execution step, a step of removing a pretreated green compact that has not fitted into any of the multiple hole portions formed in the CIP rubber mold having arranged thereon the fall prevention frame, among the multiple pretreated green compacts.

4. The method for inserting ceramic green compacts according to claim 1 or 2, wherein the arrangement step further includes a step of arranging on the CIP rubber mold a pallet member having multiple hole portions.

5. The method for inserting ceramic green compacts according to claim 1 or 2, wherein a maximum diameter of each of the multiple pretreated green compacts is 15 mm or less.

6. The method for inserting ceramic green compacts according to claim 1 or 2, wherein each of the multiple pretreated green compacts is a green compact of silicon nitride.

7. A method for producing CIP green compacts, comprising:
the pouring step and the operation execution step according to claim 1 or 2; and
a CIP step of performing a CIP process on, among the multiple pretreated green compacts, one or more of the pretreated green compacts respectively filling one or more of the multiple hole portions, thereby generating multiple CIP green compacts.

8. A method for producing sintered ceramic compacts, comprising:
the pouring step, the operation execution step, and the CIP step according to claim 7; and
a sintering step of sintering the multiple CIP green compacts to produce multiple sintered ceramic compacts.

9. The method for producing sintered ceramic compacts according to claim 8, wherein each of the multiple sintered ceramic compacts has a ball shape without a band-shaped portion, a ball shape with the band-shaped portion, or a cylindrical shape.
